# FASCICULE DE BREVET EUROPEEN

(11) **EP 3 301 019 B1**
(45) Date de publication et mention de la délivrance du brevet: **10.04.2019**
(21) Numéro de dépôt: 17191029.2
(22) Date de dépôt: 14.09.2017
(51) Int. Cl.: B64C 13/50, B64C 27/56, B64C 13/04, B64C 13/46, G05B 19/402, H02P 21/13, H02P 21/14, H02P 23/14, H02P 21/18, H02P 21/20

(54) **DISPOSITIF DE COMMANDE D'UN AERONEF, AERONEF CORRESPONDANT ET METHODE DE PILOTAGE D'UN AERONEF**
VORRICHTUNG ZUR STEUERUNG EINES LUFTFAHRZEUGS, ENTSPRECHENDES LUFTFAHRZEUG UND STEUERMETHODE EINES LUFTFAHRZEUGS
AN AIRCRAFT CONTROL DEVICE, A CORRESPONDING AIRCRAFT, AND A METHOD OF CONTROLLING AN AIRCRAFT

(30) Priorité: 03.10.2016 FR 1601430
(43) Date de publication de la demande: 04.04.2018
(73) Titulaire: Airbus Helicopters, 13725 Marignane Cedex (FR)
(72) Inventeur: HONNORAT, Olivier, 13290 Aix-en-Provence (FR); NEVERS, Romain, 13330 Pélissanne (FR); KOVEL, Romain, 13080 Luynes (FR)
(74) Mandataire: GPI & Associés

(56) Documents cités:
- FR-A1- 2 718 102
- FR-A1- 2 989 353
- US-A1- 2016 221 674
- US-B2- 8 942 866

## Description

La présente invention concerne un dispositif de commande d'un aéronef, un tel aéronef équipé d'un dispositif de commande de ce type et une méthode de pilotage correspondante permettant à un pilote de réaliser un pilotage d'un aéronef tel que par exemple un avion ou un giravion.

L'invention vise plus particulièrement un dispositif de commande dans lequel un "vérin de trim" est placé en parallèle d'une chaîne principale de commande permettant de commander des moyens aérodynamiques d'un aéronef. Ce vérin de trim constitue notamment un système d'assistance au pilotage en facilitant le maintien d'un organe de commande dans une position déterminée.

En effet, un tel aéronef comporte également au moins un organe de commande destiné à être manoeuvré par au moins un pilote et permettant de réaliser un déplacement des moyens aérodynamiques.

Ainsi, pour la suite de la présente demande, on entend désigner par organe de commande tout dispositif de commande apte à être manoeuvré par un pilote ou automatiquement que ce soit dans un cockpit de pilotage ou à l'extérieur de l'aéronef lorsque celui-ci n'embarque pas de pilote. De tels organes de commande peuvent ainsi se présenter sous diverses formes et notamment, d'une part, celle d'un levier, d'un manche ou d'un "mini-manche", également désigné en langue anglaise par le terme de "joystick", ou encore d'autre part, celle d'un palonnier.

Ces organes de commande permettent alors de déplacer des moyens aérodynamiques par rapport à un flux d'air incident relativement à un fuselage de l'aéronef. De tels moyens aérodynamiques peuvent alors, dans le cas d'un avion, consister soit par exemple en des volets, des ailerons ou des spoilers d'aile, soit par exemple en une gouverne de direction d'une dérive ou d'une gouverne de profondeur.

Dans le cas d'un giravion, de tels moyens aérodynamiques peuvent cependant correspondre par exemple à un angle de pas collectif ou cyclique des pales d'un rotor principal et à un angle de pas collectif des pales notamment d'un rotor arrière, par exemple.

Par ailleurs, un aéronef comporte généralement une pluralité de vérins de trim pour permettre de commander plusieurs moyens aérodynamiques. Ces vérins de trim peuvent alors être du type "motorisés à ancrage" pour permettre de générer un effort résistant dans un organe de commande de l'aéronef à partir d'un couple résistant généré par au moins un moteur électrique du vérin de trim. De plus, de tels vérins de trim peuvent également être de type actif : dans ce cas le gradient d'effort du couple résistant généré par le ou les moteurs électriques peut varier avec une position "d'ancrage" du vérin de trim.

Par ailleurs, pour réaliser une commande d'un tel vérin de trim, il est nécessaire d'asservir une consigne de commande du ou des moteurs électriques de manière à garantir un fonctionnement optimal des différents organes.

Pour ce faire, et tel que notamment décrit par les documents FR 2 718 102, FR 2 989 353, US2016 / 0221674, US 8 942 866, US2005 / 0080495 et US 7 108 232, il a alors été développé des dispositifs de commande comportant notamment une boucle d'asservissement dite "en effort" du (ou des) moteur(s) électrique(s) du vérin de trim. De telles boucles d'asservissement sont dans ce cas réalisées au moyen de capteurs d'effort mesurant un effort exercé sur une chaîne cinématique de l'organe de commande. De cette manière, il est alors possible d'adapter la consigne de commande du moteur électrique en fonction de la mesure de l'effort exercé sur la chaîne cinématique de l'organe de commande. La boucle d'asservissement en effort est alors généralement combinée avec une boucle d'asservissement en courant électrique pour générer la consigne de commande du (ou des) moteur(s) électrique(s) du vérin de trim.

Cependant, de tels dispositifs de commande ne permettent pas de réaliser un ancrage dynamique d'un vérin série agencé en série sur la chaîne principale de commande permettant de commander les moyens aérodynamiques de l'aéronef. En effet, une variation de position d'un organe de commande induit automatiquement une variation de sa vitesse de déplacement et donc de la vitesse d'un arbre de sortie ou d'un levier de sortie du vérin de trim. Cette variation de vitesse n'est donc pas prise en compte par ces dispositifs de commande ce qui peut se révéler problématique en générant des secousses dans l'organe de commande.

En outre, l'asservissement du (ou des) moteur(s) de vérin de trim de ce type de dispositif de commande est alors peu robuste ou à tout le moins n'est pas optimum.

La présente invention a alors pour objet de proposer un dispositif de commande permettant de s'affranchir des limitations mentionnées ci-dessus via un asservissement plus robuste du (ou des) moteur(s) de vérin de trim. Ce dispositif de commande permet en outre d'ancrer dynamiquement des vérins série en prenant en compte les variations de vitesse de déplacement des organes de commande de l'aéronef.

L'invention concerne donc un dispositif de commande d'un aéronef, un tel dispositif de commande comportant au moins un "vérin de trim" motorisé à ancrage de type actif, ce vérin de trim comportant au moins un moteur électrique, au moins un circuit électronique de puissance pour alimenter en énergie électrique le (ou les) moteur(s) électrique(s) et des moyens de réduction de vitesse pour réduire la vitesse de rotation d'un axe de rotation d'un moteur électrique. En outre, de tels moyens de réduction de vitesse permettent d'entraîner en rotation un arbre de sortie du vérin de trim à une vitesse de rotation de sortie inférieure à une vitesse de rotation d'entrée de l'axe de rotation du (ou des) moteur(s) électrique(s).

Ce dispositif de commande est remarquable en ce qu'il met en oeuvre trois boucles d'asservissement distinctes et imbriquées les unes dans les autres, ces trois boucles d'asservissement étant formées par une boucle d'asservissement en courant électrique, une boucle d'asservissement en vitesse et une boucle d'asservissement en effort.

La boucle d'asservissement en courant électrique comporte alors au moins une sonde de courant électrique agencée en entrée du (ou des) moteur(s) électrique(s) pour mesurer une valeur d'un courant électrique d'alimentation en énergie électrique fourni par le (ou les) circuit(s) électronique(s) de puissance. Une telle boucle d'asservissement en courant électrique comporte également au moins un premier capteur de position agencé sur l'axe de rotation du (ou des) moteur(s) électrique(s) pour mesurer une position angulaire de l'axe de rotation par rapport à un châssis fixe du vérin de trim.

La boucle d'asservissement en vitesse comporte quant à elle au moins un second capteur de position agencé sur l'arbre de sortie du vérin de trim pour mesurer une position angulaire de cet arbre de sortie par rapport au châssis fixe du vérin de trim. Une telle boucle d'asservissement en vitesse comporte également une branche de sortie connectée à une entrée de la boucle d'asservissement en courant électrique.

Enfin, la boucle d'asservissement en effort comporte au moins un capteur d'effort agencé au niveau d'au moins un organe de commande de vol pour mesurer un effort extérieur exercé sur le (ou les) organe(s) de commande de vol. De plus, la boucle d'asservissement en effort comporte également une ligne de sortie connectée à une entrée de la boucle d'asservissement en vitesse.

Autrement dit, le second capteur de position permet de mesurer la vitesse de variation de la position du (ou des) organe(s) de commande. La boucle d'asservissement en vitesse peut alors permettre de générer, via un comparateur/soustracteur, un ordre inverse à celui généré par la boucle d'asservissement en courant électrique.

Une telle boucle d'asservissement en vitesse et son imbrication avec la boucle d'asservissement en courant électrique et la boucle d'asservissement en effort permet alors de réaliser l'ancrage dynamique du (ou des) vérin(s) série de l'aéronef.

Par ailleurs, la boucle d'asservissement en vitesse permet également de réaliser un pilotage de la vitesse de déplacement du point d'ancrage via un dispositif de pilote automatique de l'aéronef. En effet, la boucle d'asservissement en vitesse permet alors de réaliser un pilotage "fluide" de la consigne générant une position d'ancrage, également désignée par l'expression de "position d'effort nul" sur le (ou les) organe(s) de commande de vol.

La boucle d'asservissement en vitesse permet ainsi d'éviter des oscillations en rotation de l'arbre de sortie du vérin de trim par rapport à son châssis fixe ce qui provoquerait des secousses ou des à-coups dans le (ou les) organe(s) de commande de vol. En effet, une boucle d'asservissement en vitesse permet alors de prendre en considération les jeux internes des moyens de réduction de vitesse du vérin de trim et/ou les jeux internes de la chaîne principale de commande permettant de commander des moyens aérodynamiques d'un aéronef. En effet, de tels jeux ne doivent pas être perçus par le pilote lors de la manipulation du (ou des) organe(s) de commande de vol.

Avantageusement, le (ou les) moteur(s) électrique(s) peu(ven)t être de type triphasé et la boucle d'asservissement en courant électrique peut comporter trois sondes de courant électrique mesurant respectivement chacune une valeur d'un courant électrique d'alimentation en énergie électrique fourni par le (ou les) circuit(s) électronique(s) de puissance.

En d'autres termes, sur chacune des trois phases du (ou des) moteur(s), une sonde de courant électrique mesure les variations de l'intensité du signal. Le (ou les) moteur(s) électrique(s) peu(ven)t notamment être de type "Brushless".

En pratique, le dispositif de commande peut comporter au moins un calculateur permettant de mettre en oeuvre une méthode de commande vectorielle du (ou des) moteur(s) électrique(s) triphasé(s), une telle méthode de commande vectorielle permettant de fournir deux composantes orthogonales : une première composante représentative d'un réglage d'un flux magnétique du (ou des) moteur(s) électrique(s) et une seconde composante représentative d'un réglage d'un couple moteur du (ou des) moteur(s) électrique(s).

De cette manière, le (ou les) moteur(s) électrique(s) peu(ven)t être asservis en évitant de générer des ondulations de couple causées par la commande du circuit électronique associé. En effet, chaque phase doit normalement être pilotée suivant une commande sinus, et synchronisée avec un déphasage de 120 degrés par rapport aux deux autres phases. Ce pilotage nécessite une bande passante élevée impliquant une électronique de pointe ayant une puissance de calcul très importante.

Une telle électronique n'est cependant pas envisageable pour un système embarqué très compact destiné à être agencé dans un aéronef. La méthode de commande vectorielle permet alors de réaliser un autre mode de pilotage du courant électrique dans chaque phase du (ou des) moteur(s) électrique(s).

En effet, avant d'implémenter une valeur d'état dans un régulateur, on transforme, via des transformations trigonométriques, le système triphasé à trois courants électriques en un système biphasé à deux courants électriques en fonction de la position du rotor de chaque moteur électrique. Ainsi, on génère un système fictif de courants électriques dans un plan complexe avec un courant électrique réel Id et un courant électrique imaginaire Iq. Le courant électrique réel Id étant maintenu à la valeur 0, on pilote alors une seule valeur du courant électrique imaginaire Iq.

De cette manière, on obtient un déphasage des phases qui est constant. Le système triphasé est donc simplifié et est ramené à un système monophasé avec une seule valeur d'état Iq à commander. Dés lors, asservir une seule valeur de courant électrique imaginaire Iq devient très facile. Une fois ce courant électrique imaginaire asservi, par exemple au moyen d'un soustracteur et d'un régulateur proportionnel intégrateur, les transformées trigonométriques inverses sont calculées, pour en déduire les trois courants électriques de pilotage à appliquer aux bornes du (ou des) moteur(s) électrique(s).

Selon un exemple de réalisation de l'invention, la boucle d'asservissement en vitesse peut comporter un circuit de calcul permettant de déterminer, à partir d'un premier signal représentatif de la position angulaire de l'arbre de sortie du vérin de trim, un second signal représentatif d'une vitesse de rotation de cet arbre de sortie.

Ainsi, le signal dérivé peut alors être filtré pour éliminer des oscillations et du bruit numérique dû à la dérivation. Un tel filtre peut notamment être un filtre dit à moyenne glissante permettant par exemple d'éliminer les fréquences supérieures à 80Hz. Selon un exemple de réalisation, la bande passante de la boucle d'asservissement en vitesse peut alors être de 50Hz - 80Hz.

Enfin, selon la stratégie de sécurité et de bridage des performances du vérin de trim, un dispositif de type "limiter" peut être utilisé afin de limiter à une valeur maximale la consigne de vitesse en sortie de la boucle d'asservissement en vitesse.

Avantageusement, la boucle d'asservissement en courant électrique peut comporter au moins un premier filtre permettant d'éliminer des fréquences parasites d'un signal représentatif de la position angulaire de l'axe de rotation du (ou des) moteur(s) électrique(s).

En effet, les mesures de courant électrique données par les sondes de courant électrique peuvent être perturbées par des champs électromagnétiques parasites. Les signaux sont donc filtrés à environ 2 kHz, de manière à supprimer des perturbations telles que celles provenant du circuit électronique de puissance permettant d'alimenter en énergie électrique le (ou les) moteur(s). Une fréquence de hachage du (ou des) premier(s) filtre(s) est alors comprise entre 10 kHz et 20 kHz.

Par suite, la bande passante de la boucle d'asservissement en courant électrique est réglée à 500 Hz - 1 kHz.

De même, la boucle d'asservissement en vitesse peut comporter au moins un second filtre permettant d'éliminer des fréquences parasites d'un signal représentatif de la position angulaire de l'arbre de sortie du vérin de trim.

En d'autres termes, avant d'être dérivé, le signal issu du second capteur de position agencé sur l'arbre de sortie peut être filtré une première fois entre 500 Hz et 1 kHz pour éliminer les bruits électromagnétiques, en particulier la fréquence de commutation d'un pont de puissance qui est généralement comprise entre 10 kHz et 20 kHz, puis une seconde fois entre 100 Hz et 150 Hz pour limiter et adapter la bande passante de la boucle d'asservissement en vitesse.

Selon un exemple de réalisation de l'invention, le (ou les) capteur(s) d'effort peu(ven)t être agencé(s) mécaniquement en série par rapport au(x) organe(s) de commande de vol.

De tels capteurs peuvent ainsi permettent d'effectuer respectivement chacun des mesures simultanées et redondantes de l'effort transmis au(x) organe(s) de commande de vol.

Avantageusement, la boucle d'asservissement en effort peut comporter une mémoire permettant de stocker au moins une table de valeurs d'efforts prédéterminés à appliquer au(x) organe(s) de commande de vol en fonction d'une donnée de position transmise par le (ou les) second(s) capteur(s) de position de la boucle d'asservissement en vitesse.

Ainsi, le second capteur de position donne une position angulaire de l'arbre de sortie par rapport au châssis fixe du vérin de trim. A cette position angulaire correspond un effort théorique à obtenir au niveau du (ou des) organe(s) de commande. Cet effort théorique est alors donné par la table de valeurs d'efforts prédéterminés préenregistrée dans la mémoire.

Cette table définit donc la loi d'effort théorique à obtenir. On compare ensuite cet effort théorique à l'effort mesuré par le capteur d'effort, puis on asservit via par exemple un régulateur proportionnel intégrateur la différence entre l'effort théorique et l'effort mesuré. La valeur de sortie permet alors de piloter en entrée la boucle d'asservissement en vitesse.

Comme déjà évoqué, l'invention concerne également un aéronef remarquable en ce qu'il comporte un dispositif de commande tel que précédemment décrit.

Enfin, la présente invention a aussi pour objet la méthode de pilotage d'un aéronef comportant au moins un "vérin de trim" motorisé à ancrage de type actif, ce vérin de trim comportant au moins un moteur électrique, au moins un circuit électronique de puissance pour alimenter en énergie électrique le (ou les) moteur(s) électrique(s) et des moyens de réduction de vitesse pour réduire la vitesse de rotation d'un axe de rotation du (ou des) moteur(s) électrique(s), les moyens de réduction de vitesse permettant d'entraîner en rotation un arbre de sortie du vérin de trim à une vitesse de rotation de sortie inférieure à une vitesse de rotation d'entrée de l'axe de rotation du (ou des) moteur(s) électrique(s).

Une telle méthode de pilotage est alors remarquable en ce qu'elle comporte trois boucles d'asservissement distinctes et imbriquées les unes dans les autres, ces trois boucles d'asservissement étant formées par une boucle d'asservissement en courant électrique, une boucle d'asservissement en vitesse et une boucle d'asservissement en effort, et en ce que :
dans la boucle d'asservissement en courant électrique :
   - en entrée du (ou des) moteur(s) électrique(s), on mesure, via au moins une sonde de courant électrique, une valeur d'un courant électrique d'alimentation en énergie électrique fourni par le (ou les) circuit(s) électronique(s) de puissance, et
   - sur l'axe de rotation du (ou des) moteur(s) électrique(s), on mesure, via au moins un premier capteur de position, une position angulaire de l'axe de rotation par rapport à un châssis fixe du vérin de trim,
dans la boucle d'asservissement en vitesse :
   - sur l'arbre de sortie, on mesure, via au moins un second capteur de position, une position angulaire de l'arbre de sortie par rapport au châssis fixe du vérin de trim, et
   - on connecte une branche de sortie avec une entrée de la boucle d'asservissement en courant électrique,
dans la boucle d'asservissement en effort :
   - au niveau d'au moins un organe de commande de vol, on mesure, via au moins un capteur d'effort, un effort extérieur exercé sur le (ou les) organe(s) de commande de vol, et
   - on connecte une ligne de sortie avec une entrée de la boucle d'asservissement en vitesse.

Une telle méthode de pilotage permet alors notamment de réaliser l'ancrage dynamique du (ou des) vérin(s) série de l'aéronef.

Par ailleurs, le (ou les) moteur(s) électrique(s) étant de type triphasé, la boucle d'asservissement en courant électrique peut comporter une étape de mesure, via trois sondes de courant électrique, de trois valeurs d'un courant électrique d'alimentation en énergie électrique fourni par le (ou les) circuit(s) électronique(s) de puissance.

En pratique, on peut mettre en oeuvre, via au moins un calculateur, une étape de commande vectorielle du (ou des) moteur(s) électrique(s) triphasé(s), une telle étape de commande vectorielle permettant de fournir deux composantes orthogonales : une première composante représentative d'un réglage d'un flux magnétique du (ou des) moteur(s) électrique(s) et une seconde composante représentative d'un réglage d'un couple moteur du (ou des) moteur(s) électrique(s).

Avantageusement, la boucle d'asservissement en vitesse peut comporter une étape de calcul permettant de déterminer, via un circuit de calcul utilisant en entrée un premier signal représentatif de la position angulaire de l'arbre de sortie du vérin de trim, un second signal dérivé représentatif d'une vitesse de rotation de l'arbre de sortie.

En pratique, la boucle d'asservissement en courant électrique peut comporter une première étape de filtration permettant, via au moins un premier filtre, d'éliminer des fréquences parasites d'un signal représentatif de la position angulaire de l'axe de rotation du (ou des) moteur(s) électrique(s).

De même par analogie, la boucle d'asservissement en vitesse peut comporter une seconde étape de filtration permettant, via au moins un second filtre, d'éliminer des fréquences parasites d'un signal représentatif de la position angulaire de l'arbre de sortie du vérin de trim.

Enfin selon un exemple de réalisation, la boucle d'asservissement en effort peut comporter une étape de stockage permettant de mémoriser au moins une table de valeurs d'efforts prédéterminés à appliquer au(x) organe(s) de commande de vol en fonction d'une donnée de position transmise par le (ou les) second(s) capteur(s) de position de la boucle d'asservissement en vitesse.

L'invention et ses avantages apparaîtront avec plus de détails dans le cadre de la description qui suit avec des exemples donnés à titre illustratif en référence aux figures annexées qui représentent :
- la figure 1, une vue schématique de coté d'un aéronef conforme à l'invention,
- la figure 2, une vue en perspective d'un vérin de trim équipant un aéronef, conformément à l'invention,
- la figure 3, un schéma de principe du dispositif de commande et de la méthode de pilotage, conformément à l'invention, et
- la figure 4, un schéma de principe de la méthode de pilotage conforme à l'invention.

Les éléments présents dans plusieurs figures distinctes sont affectés d'une seule et même référence.

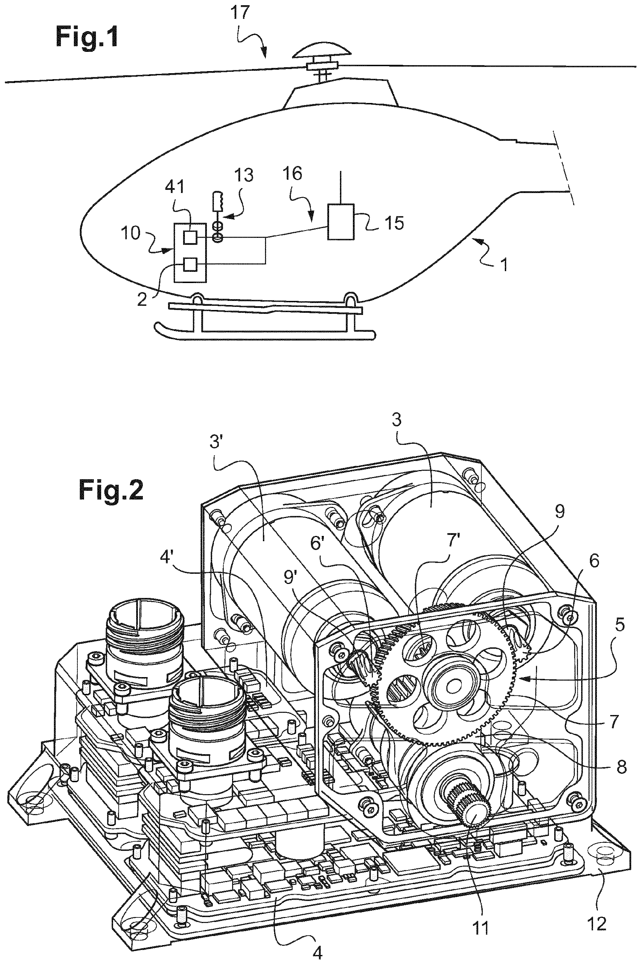

Comme déjà évoqué l'invention se rapporte à un aéronef 1, tel que par exemple représenté à la figure 1 sous la forme d'un giravion.

Un tel aéronef 1 est alors équipé d'au moins un vérin de trim 2 motorisé à ancrage de type actif. Un tel vérin de trim 2 permet alors notamment de commander une position d'ancrage d'un organe de commande de vol 13 représenté par exemple sous la forme d'un manche de pas cyclique pour commander cycliquement le pas des pales d'un rotor, d'un levier de pas collectif pour commander collectivement le pas des dites pales ou d'un palonnier. En outre, un tel aéronef 1 comporte également un dispositif de commande 10 pour permettre de réaliser l'asservissement de la consigne de commande d'au moins un moteur électrique du vérin de trim 2.

Par ailleurs, cet asservissement de la consigne de commande du moteur électrique du vérin de trim 2 permet de réaliser un ancrage dynamique d'au moins un vérin "série" 15. Ce (ou ces) vérin(s) série 15 est (sont) agencé(s) en série par rapport à une chaîne principale 16 de commande permettant de commander des moyens aérodynamiques 17 de l'aéronef 1. Tels que représentés dans le cas d'un giravion, ces moyens aérodynamiques 17 peuvent être formés par des pales d'un rotor dont on peut modifier un pas cyclique ou collectif pour piloter cet aéronef 1.

Tel que représenté à la figure 2, un tel vérin de trim 2 peut comporter deux moteurs électriques 3 ,3' comportant respectivement chacun un axe de rotation 9, 9', des moyens de réduction de vitesse 5 et un arbre de sortie 11 mobile en rotation par rapport à un châssis 12 du vérin de trim 2.

De tels moteurs électriques 3, 3' sont alors alimentés en énergie électrique respectivement chacun par un circuit électronique de puissance 4, 4'. Ces deux circuits électroniques de puissance 4, 4' sont alors montés sur le châssis 12 du vérin de trim 2 et permettent notamment une redondance de la commande du mouvement de rotation de l'arbre de sortie 11 du vérin de trim 2.

Par ailleurs, les moyens de réduction de vitesse 5 permettent de réduire la vitesse de rotation des deux moteurs électrique 3, 3' pour que la vitesse de rotation de l'arbre de sortie 11 soit inférieure à la vitesse de rotation des deux moteurs électriques 3, 3'.

De tels moyens de réduction de vitesse 5 peuvent ainsi par exemple comporter un train de pignons dentés 6, 6', 7, 7' et une pièce partiellement dentée 8 solidarisée sans degré de liberté avec l'arbre de sortie 11

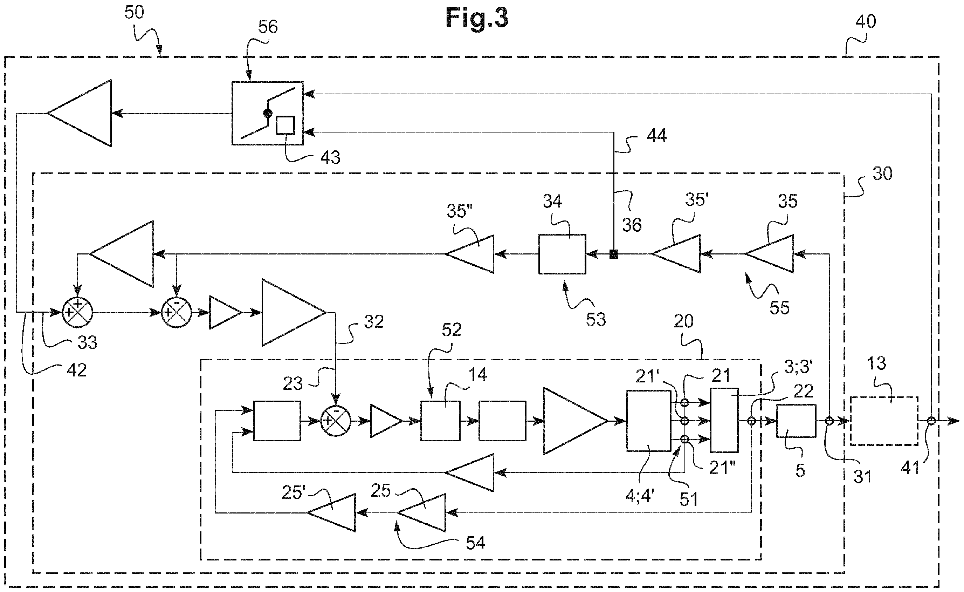

Par suite, et tel que représenté à la figure 3, le dispositif de commande 10 met en oeuvre trois boucles d'asservissement distinctes et imbriquées les unes dans les autres. Ces trois boucles d'asservissement d'une méthode de pilotage 50 sont ainsi formées par une boucle d'asservissement en courant électrique 20, une boucle d'asservissement en vitesse 30 et une boucle d'asservissement en effort 40.

Une telle boucle d'asservissement en courant électrique 20 peut comporter par exemple trois sondes de courant électrique 21, 21', 21" agencées en entrée de chacune des phases d'un moteur électrique 3, 3' de type triphasé. Ces trois sondes de courant électrique 21, 21', 21" permettent alors de mesurer une valeur d'un courant électrique d'alimentation triphasé en énergie électrique fourni par l'un des circuits électronique de puissance 4, 4'.

De plus, la boucle d'asservissement en courant électrique 20 comporte également un premier capteur de position 22 agencé sur l'axe de rotation 9, 9' du moteur électrique 3, 3'. Un tel premier capteur de position 22 permet ainsi de mesurer une position angulaire de l'axe de rotation 9, 9' par rapport au châssis fixe 12 du vérin de trim 2.

Par ailleurs, le dispositif de commande 10 peut comporter un calculateur 14 permettant de mettre en oeuvre une méthode de commande vectorielle du moteur électrique 3, 3' triphasé. Cette méthode de commande vectorielle permet alors de fournir deux composantes orthogonales : une première composante représentative d'un réglage d'un flux magnétique du moteur électrique 3, 3' et une seconde composante représentative d'un réglage d'un couple moteur du moteur électrique 3, 3'.

Dans ce cas, la méthode de pilotage 50 comporte alors une étape de mesure 51 des trois valeurs du courant électrique d'alimentation en énergie électrique fourni par le circuit électronique de puissance 4, 4' au moteur électrique 3, 3' et une étape de commande vectorielle 52.

Au surplus, la boucle d'asservissement en courant électrique 20 peut également comporter deux premiers filtres 25, 25' permettant d'éliminer des fréquences parasites d'un signal représentatif de la position angulaire de l'axe de rotation 9, 9' du moteur électrique 3, 3'.

Dans ce cas, la méthode de pilotage 50 comporte aussi une première étape de filtration 54 permettant, via les deux premiers filtres 25, 25', d'éliminer des fréquences parasites d'un signal représentatif de la position angulaire de l'axe de rotation 9, 9' du moteur électrique 3, 3'. Par exemple, la boucle d'asservissement en courant électrique 20 peut comporter un premier filtre 25 de type analogique agencé en série en amont d'un premier filtre 25' de type numérique.

En outre, la boucle d'asservissement en vitesse 30 comporte quant à elle un second capteur de position 31 agencé sur l'arbre de sortie 11 de manière à mesurer la position angulaire de l'arbre de sortie 11 par rapport au châssis fixe 12 du vérin de trim 2.

Telle que représentée, la boucle d'asservissement en vitesse 30 peut alors comporter deux seconds filtres 35, 35' permettant d'éliminer des fréquences parasites du signal représentatif de la position angulaire de l'arbre de sortie 11 fourni par le second capteur de position 31.

Dans ce cas, la méthode de pilotage 50 comporte aussi une seconde étape de filtration 55 permettant, via les deux seconds filtres 35, 35', d'éliminer des fréquences parasites d'un signal représentatif de la position angulaire de l'arbre de sortie 11. Par exemple, la boucle d'asservissement en vitesse 30 peut comporter un second filtre 35 de type analogique agencé en série en amont d'un second filtre 35' de type numérique.

Par ailleurs, la boucle d'asservissement en vitesse 30 peut comporter également une branche de sortie 36 connectée à une entrée 44 de la boucle d'asservissement en effort 40.

En outre, la boucle d'asservissement en vitesse 30 peut comporter un circuit de calcul 34 permettant de déterminer, à partir d'un premier signal représentatif de la position angulaire de l'arbre de sortie 11, un second signal représentatif d'une vitesse de rotation de l'arbre de sortie 11.

Dans ce cas, la méthode de pilotage 50 comporte alors une étape de calcul 53 utilisant en entrée le premier signal représentatif de la position angulaire de l'arbre de sortie 11.

Selon un exemple de réalisation particulier, un tel circuit de calcul 34 peut être un circuit dérivateur permettant de dériver le premier signal représentatif de la position angulaire de l'arbre de sortie 11. Par analogie, l'étape de calcul 53 peut alors dans ce cas correspondre à une étape de dérivation du premier signal représentatif de la position angulaire de l'arbre de sortie 11.

La boucle d'asservissement en vitesse 30 peut également comporter un troisième filtre 35" de type numérique pour supprimer d'éventuelles fréquences parasites d'un signal représentatif de la vitesse de rotation de l'arbre de sortie 11 du vérin de trim 2 par rapport au châssis fixe 12 de ce vérin de trim 2.

Enfin, la boucle d'asservissement en vitesse 30 comporte également une branche de sortie 32 connectée à une entrée 23 de la boucle d'asservissement en courant électrique 20 pour permettre de réguler continûment le moteur électrique 3 en vitesse. Une telle boucle d'asservissement en vitesse 30 permet alors à la fois d'ancrer dynamiquement les vérins série 15 de l'aéronef 1 et de piloter en vitesse la valeur d'un point d'ancrage fourni par un dispositif de type pilote automatique.

Par ailleurs, la boucle d'asservissement en effort 40 comporte quant à elle un capteur d'effort 41 agencé au niveau de l'organe de commande de vol 13 et permet de mesurer un effort extérieur exercé sur cet organe de commande de vol 13.

En pratique la boucle d'asservissement en effort 40 peut comporter une mémoire 43 permettant de mettre en oeuvre une étape de stockage 56 d'au moins une table de valeurs d'efforts prédéterminés à appliquer à l'organe de commande de vol 13. La donnée d'effort théorique est alors déterminée en fonction d'une donnée de position de l'arbre de sortie 11 transmise par le second capteur de position 31 via la branche de sortie 36 connectée à l'entrée 44 de la boucle d'asservissement en effort 40.

Enfin, la boucle d'asservissement en effort 40 comporte une ligne de sortie 42 connectée à une entrée 33 de la boucle d'asservissement en vitesse 30 pour permettre de piloter la boucle d'asservissement en vitesse 30.

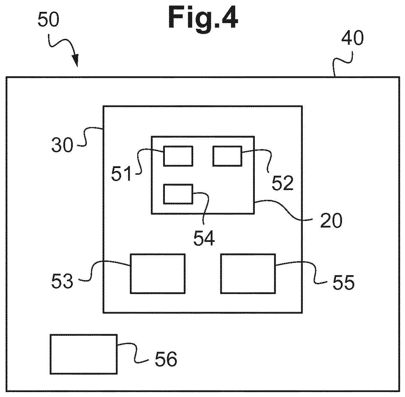

Telle que représentée de manière épurée à la figure 4, la méthode de pilotage 50 comporte trois boucles d'asservissement formées par une boucle d'asservissement en courant électrique 20, une boucle d'asservissement en vitesse 30 et une boucle d'asservissement en effort 40.

La boucle d'asservissement en courant électrique 20 comporte alors notamment l'étape de mesure 51 pour mesurer le courant électrique d'alimentation en énergie électrique par le circuit électronique de puissance 4, 4' au moteur électrique 3, 3'.

La boucle d'asservissement en courant électrique 20 comporte aussi l'étape de commande vectorielle 52 telle que précédemment décrite et la première étape de filtration 54 du signal issu de la position angulaire de l'axe de rotation 9, 9' du moteur électrique 3, 3'.

La boucle d'asservissement en vitesse 30 comporte quant à elle, d'une part, la boucle d'asservissement en courant électrique 20, et d'autre part, l'étape de dérivation 53 pour dériver le signal issu de la position angulaire de l'axe de rotation 9, 9' du moteur électrique 3, 3' et la seconde étape de filtration 55 pour filtrer le signal issu de la position angulaire de l'arbre de sortie 11 du vérin de trim 2 par rapport au châssis fixe 12 de ce vérin de trim 2.

Enfin, la boucle d'asservissement en effort 40 comporte quant à elle, d'une part, la boucle d'asservissement en vitesse 30, et d'autre part, l'étape de stockage 56 d'au moins une table de valeurs d'efforts prédéterminés à appliquer à l'organe de commande de vol 13.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Dispositif de commande (10) d'un aéronef (1), ledit dispositif de commande (10) comportant au moins un "vérin de trim" (2) motorisé à ancrage de type actif, ledit vérin de trim (2) comportant au moins un moteur électrique (3, 3'), au moins un circuit électronique de puissance (4, 4') pour alimenter en énergie électrique ledit au moins un moteur électrique (3, 3') et des moyens de réduction de vitesse (5) pour réduire la vitesse de rotation d'un axe de rotation (9, 9') dudit au moins un moteur électrique (3, 3'), lesdits moyens de réduction de vitesse (5) permettant d'entraîner en rotation un arbre de sortie (11) dudit vérin de trim (2) à une vitesse de rotation de sortie inférieure à une vitesse de rotation d'entrée dudit axe de rotation (9, 9') dudit au moins un moteur électrique (3, 3'),
**caractérisé en ce que** ledit dispositif de commande (10) met en oeuvre trois boucles d'asservissement distinctes et imbriquées les unes dans les autres, lesdites trois boucles d'asservissement étant formées par une boucle d'asservissement en courant électrique (20), une boucle d'asservissement en vitesse (30) et une boucle d'asservissement en effort (40), et **en ce que** :
ladite boucle d'asservissement en courant électrique (20) comporte :
• au moins une sonde de courant électrique (21, 21', 21") agencée en entrée dudit au moins un moteur électrique (3, 3') pour mesurer une valeur d'un courant électrique d'alimentation en énergie électrique fourni par ledit au moins un circuit électronique de puissance (4) et
• au moins un premier capteur de position (22) agencé sur ledit axe de rotation (9, 9') dudit au moins un moteur électrique (3, 3') pour mesurer une position angulaire dudit axe de rotation (9, 9') par rapport à un châssis fixe (12) dudit vérin de trim (2),
ladite boucle d'asservissement en vitesse (30) comporte :
• au moins un second capteur de position (31) agencé sur ledit arbre de sortie (11) dudit vérin de trim (2) pour mesurer une position angulaire dudit arbre de sortie (11) par rapport audit châssis fixe (12) dudit vérin de trim (2),
• une branche de sortie (32) connectée à une entrée (23) de ladite boucle d'asservissement en courant électrique (20),
ladite boucle d'asservissement en effort (40) comporte :
• au moins un capteur d'effort (41) agencé au niveau d'au moins un organe de commande de vol (13) pour mesurer un effort extérieur exercé sur ledit au moins un organe de commande de vol (13),
• une ligne de sortie (42) connectée à une entrée (33) de ladite boucle d'asservissement en vitesse (30).

2. Dispositif selon la revendication 1,
**caractérisé en ce que** ledit au moins un moteur électrique (3, 3') est de type triphasé et ladite boucle d'asservissement en courant électrique (20) comporte trois sondes de courant électrique (21, 21', 21") mesurant respectivement chacune une valeur d'un courant électrique d'alimentation en énergie électrique fourni par ledit au moins un circuit électronique de puissance (4, 4').

3. Dispositif selon la revendication 2,
**caractérisé en ce que** ledit dispositif de commande (10) comporte au moins un calculateur (14) permettant de mettre en oeuvre une méthode de commande vectorielle dudit au moins un moteur électrique (3, 3') triphasé, une telle méthode de commande vectorielle permettant de fournir deux composantes orthogonales : une première composante représentative d'un réglage d'un flux magnétique dudit au moins un moteur électrique (3, 3') et une seconde composante représentative d'un réglage d'un couple moteur dudit au moins un moteur électrique (3, 3').

4. Dispositif selon l'une quelconque des revendications 1 à 3,
**caractérisé en ce que** ladite boucle d'asservissement en vitesse (30) comporte un circuit de calcul (34) permettant de déterminer, à partir d'un premier signal représentatif de ladite position angulaire dudit arbre de sortie (11) dudit vérin de trim (2), un second signal représentatif d'une vitesse de rotation dudit arbre de sortie (11).

5. Dispositif selon l'une quelconque des revendications 1 à 4,
**caractérisé en ce que** ladite boucle d'asservissement en courant électrique (20) comporte au moins un premier filtre (25, 25') permettant d'éliminer des fréquences parasites d'un signal représentatif de ladite position angulaire dudit axe de rotation (9, 9') dudit au moins un moteur électrique (3, 3').

6. Dispositif selon l'une quelconque des revendications 1 à 5,
**caractérisé en ce que** ladite boucle d'asservissement en vitesse (30) comporte au moins un second filtre (35, 35') permettant d'éliminer des fréquences parasites d'un signal représentatif de ladite position angulaire dudit arbre de sortie (11) dudit vérin de trim (2).

7. Dispositif selon l'une quelconque des revendications 1 à 6, **caractérisé en ce que** ledit au moins un capteur d'effort (41) est agencé mécaniquement en série par rapport audit au moins un organe de commande de vol (13).

8. Dispositif selon l'une quelconque des revendications 1 à 7,
**caractérisé en ce que** ladite boucle d'asservissement en effort (40) comporte une mémoire (43) permettant de stocker au moins une table de valeurs d'efforts prédéterminés à appliquer audit au moins un organe de commande de vol (13) en fonction d'une donnée de position transmise par ledit au moins un second capteur de position (31) de ladite boucle d'asservissement en vitesse (30).

9. Aéronef (1) **caractérisé en ce que** ledit aéronef (1) comporte un dispositif de commande (10) selon l'une quelconque des revendications 1 à 8.

10. Méthode de pilotage (50) d'un aéronef (1) comportant au moins un "vérin de trim" (2) motorisé à ancrage de type actif, ledit vérin de trim (2) comportant au moins un moteur électrique (3, 3'), au moins un circuit électronique de puissance (4, 4') pour alimenter en énergie électrique ledit au moins un moteur électrique (3, 3') et des moyens de réduction de vitesse (5) pour réduire la vitesse de rotation d'un axe de rotation (9, 9') dudit au moins un moteur électrique (3, 3'), lesdits moyens de réduction de vitesse (5) permettant d'entraîner en rotation un arbre de sortie (11) dudit vérin de trim (2) à une vitesse de rotation de sortie inférieure à une vitesse de rotation d'entrée dudit axe de rotation (9, 9') dudit au moins un moteur électrique (3, 3'),
**caractérisée en ce que** ladite méthode de pilotage (50) comporte trois boucles d'asservissement distinctes et imbriquées les unes dans les autres, lesdites trois boucles d'asservissement étant formées par une boucle d'asservissement en courant électrique (20), une boucle d'asservissement en vitesse (30) et une boucle d'asservissement en effort (40), et **en ce que** :
dans ladite boucle d'asservissement en courant électrique (20) :
• en entrée dudit au moins un moteur électrique (3, 3'), on mesure, via au moins une sonde de courant électrique (21, 21', 21"), une valeur d'un courant électrique d'alimentation en énergie électrique fourni par ledit au moins un circuit électronique de puissance (4, 4'), et
• sur ledit axe de rotation (9, 9') dudit au moins un moteur électrique (3, 3'), on mesure, via au moins un premier capteur de position (22), une position angulaire dudit axe de rotation (9, 9') par rapport à un châssis fixe (12) dudit vérin de trim (2),
dans ladite boucle d'asservissement en vitesse (30) :
• sur ledit arbre de sortie (11), on mesure, via au moins un second capteur de position (31), une position angulaire dudit arbre de sortie (11) par rapport audit châssis fixe (12) dudit vérin de trim (2), et
• on connecte une branche de sortie (32) avec une entrée (23) de ladite boucle d'asservissement en courant électrique (20),
dans ladite boucle d'asservissement en effort (40) :
• au niveau d'au moins un organe de commande de vol (13), on mesure, via au moins un capteur d'effort (41), un effort extérieur exercé sur ledit au moins un organe de commande de vol (13), et
• on connecte une ligne de sortie (42) avec une entrée (33) de ladite boucle d'asservissement en vitesse (30).

11. Méthode selon la revendication 10,
**caractérisée en ce que** ledit au moins un moteur électrique (3, 3') étant de type triphasé, ladite boucle d'asservissement en courant électrique (20) comporte une étape de mesure (51), via trois sondes de courant électrique (21, 21', 21"), de trois valeurs d'un courant électrique d'alimentation en énergie électrique fourni par ledit au moins un circuit électronique de puissance (4, 4').

12. Méthode selon la revendication 11,
**caractérisée en ce qu'**on met en oeuvre, via au moins un calculateur (14), une étape de commande vectorielle (52) dudit au moins un moteur électrique (3, 3') triphasé, une telle étape de commande vectorielle (52) permettant de fournir deux composantes orthogonales : une première composante représentative d'un réglage d'un flux magnétique dudit au moins un moteur électrique (3, 3') et une seconde composante représentative d'un réglage d'un couple moteur dudit au moins un moteur électrique (3, 3').

13. Méthode selon l'une quelconque des revendications 10 à 12,
**caractérisée en ce que** ladite boucle d'asservissement en vitesse (30) comporte une étape de calcul (53) permettant de déterminer, via un circuit de calcul (34) utilisant en entrée un premier signal représentatif de ladite position angulaire dudit arbre de sortie (11) dudit vérin de trim (2), un second signal représentatif d'une vitesse de rotation dudit arbre de sortie (11).

14. Méthode selon l'une quelconque des revendications 10 à 13,
**caractérisée en ce que** ladite boucle d'asservissement en courant électrique (20) comporte une première étape de filtration (54) permettant, via au moins un premier filtre (25, 25'), d'éliminer des fréquences parasites d'un signal représentatif de ladite position angulaire dudit axe de rotation (9, 9') dudit au moins un moteur électrique (3, 3').

15. Méthode selon l'une quelconque des revendications 10 à 14,
**caractérisée en ce que** ladite boucle d'asservissement en vitesse (30) comporte une seconde étape de filtration (55) permettant, via au moins un second filtre (35, 35'), d'éliminer des fréquences parasites d'un signal représentatif de ladite position angulaire dudit arbre de sortie (11) dudit vérin de trim (2).

16. Méthode selon l'une quelconque des revendications 10 à 15,
**caractérisé en ce que** ladite boucle d'asservissement en effort (40) comporte une étape de stockage (56) permettant de mémoriser au moins une table de valeurs d'efforts prédéterminés à appliquer audit au moins un organe de commande de vol (13) en fonction d'une donnée de position transmise par ledit au moins un second capteur de position (31) de ladite boucle d'asservissement en vitesse (30).

## Patentansprüche

1. Steuervorrichtung (10) für ein Luftfahrzeug (1), wobei die Steuervorrichtung (10) mindestens einen motorisierten "Trimmzylinder" (2) mit aktiver Verankerung umfasst, wobei der Trimmzylinder (2) mindestens einen Elektromotor (3, 3'), mindestens eine elektronische Leistungsschaltung (4, 4') zum Versorgen des mindestens einen Elektromotors (3, 3') mit elektrischer Energie und eine Drehzahlreduziereinrichtung (5) zum Reduzieren der Drehzahl einer Drehachse (9, 9') des mindestens einen Elektromotors (3, 3') umfasst, wobei die Drehzahlreduziereinrichtung (5) es ermöglicht, eine Ausgangswelle (11) des Trimmzylinders (2) mit einer Ausgangsdrehzahl zu drehen, die niedriger ist als eine Eingangsdrehzahl der Drehachse (9, 9') des mindestens einen Elektromotors (3, 3'),
**dadurch gekennzeichnet, dass** die Steuervorrichtung (10) drei getrennte und ineinandergreifende Regelkreise implementiert, wobei die drei Regelkreise durch einen elektrischen Stromregelkreis (20), einen Drehzahlregelkreis (30) und einen Kraftregelkreis (40) gebildet sind, und dass:
der elektrische Stromregelkreis (20) umfasst:
• mindestens eine elektrische Stromsonde (21, 21', 21"), die am Eingang des mindestens einen Elektromotors (3, 3') angeordnet ist, um einen Wert eines von der mindestens einen elektronischen Leistungsschaltung (4) bereitgestellten elektrischen Versorgungsstroms zu messen, und
• mindestens einen ersten Positionssensor (22), der auf der Drehachse (9, 9') des mindestens einen Elektromotors (3, 3') angeordnet ist, zum Messen einer Winkelposition der Drehachse (9, 9') in Bezug auf einen festen Rahmen (12) des Trimmzylinders (2),
der Drehzahlregelkreis (30) umfasst:
• mindestens einen zweiten Positionssensor (31), der auf der Ausgangswelle (11) des Trimmzylinders (2) angeordnet ist, um eine Winkelposition der Ausgangswelle (11) in Bezug auf den festen Rahmen (12) des Trimmzylinders (2) zu messen,
• einen Ausgangszweig (32), der mit einem Eingang (23) des elektrischen Stromregelkreises (20) verbunden ist,
der Kraftregelkreis (40) umfasst:
• mindestens einen Kraftsensor (41), der an mindestens einem Flugsteuerelement (13) angeordnet ist, um eine auf das mindestens eine Flugsteuerelement (13) ausgeübte äußere Kraft zu messen,
• eine Ausgangsleitung (42), die mit einem Eingang (33) des Drehzahlregelkreises (30) verbunden ist.

2. Vorrichtung nach Anspruch 1,
**dadurch gekennzeichnet, dass** der mindestens eine Elektromotor (3, 3') vom Dreiphasentyp ist und der elektrische Stromregelkreis (20) drei elektrische Stromsonden (21, 21', 21") umfasst, die jeweils einen Wert eines von der mindestens einen elektronischen Leistungsschaltung (4, 4') bereitgestellten elektrischen Versorgungsstroms messen.

3. Vorrichtung nach Anspruch 2,
**dadurch gekennzeichnet, dass** die Steuervorrichtung (10) mindestens einen Rechner (14) zum Implementieren eines Vektorsteuerungsverfahrens des mindestens einen dreiphasigen Elektromotors (3, 3') umfasst, wobei ein solches Vektorsteuerungsverfahren das Bereitstellen von zwei orthogonalen Komponenten ermöglicht:
einer für eine Regelung eines Magnetflusses des mindestens einen Elektromotors (3, 3') repräsentativen ersten Komponente und einer für eine Regelung eines Motordrehmoments des mindestens einen Elektromotors (3, 3') repräsentativen zweiten Komponente.

4. Vorrichtung nach einem der Ansprüche 1 bis 3,
**dadurch gekennzeichnet, dass** der Drehzahlregelkreis (30) eine Berechnungsschaltung (34) umfasst, die es ermöglicht, aus einem für die Winkelposition der Ausgangswelle (11) des Trimmzylinders (2) repräsentativen ersten Signal ein für eine Drehzahl der Ausgangswelle (11) repräsentatives zweites Signal zu bestimmen.

5. Vorrichtung nach einem der Ansprüche 1 bis 4,
**dadurch gekennzeichnet, dass** der elektrische Stromregelkreis (20) mindestens einen ersten Filter (25, 25') zum Eliminieren von Störfrequenzen aus einem für die Winkelposition der Drehachse (9, 9') des mindestens einen Elektromotors (3, 3') repräsentativen Signal umfasst.

6. Vorrichtung nach einem der Ansprüche 1 bis 5,
**dadurch gekennzeichnet, dass** der Drehzahlregelkreis (30) mindestens einen zweiten Filter (35, 35') zum Eliminieren von Störfrequenzen aus einem für die Winkelposition der Ausgangswelle (11) des Trimmzylinders (2) repräsentativen Signal umfasst.

7. Vorrichtung nach einem der Ansprüche 1 bis 6,
**dadurch gekennzeichnet, dass** der mindestens eine Kraftsensor (41) mechanisch in Reihe zu dem mindestens einen Flugsteuerelement (13) angeordnet ist.

8. Vorrichtung nach einem der Ansprüche 1 bis 7,
**dadurch gekennzeichnet, dass** der Kraftregelkreis (40) einen Speicher (43) zum Speichern mindestens einer vorgegebenen Tabelle von Kraftwerten umfasst, die auf das mindestens eine Flugsteuerelement (13) in Abhängigkeit von von dem mindestens einen zweiten Positionssensor (31) des Drehzahlregelkreises (30) übertragenen Positionsdaten anzuwenden sind.

9. Luftfahrzeug (1), **dadurch gekennzeichnet, dass** das Luftfahrzeug (1) eine Steuervorrichtung (10) nach einem der Ansprüche 1 bis 8 aufweist.

10. Verfahren zum Steuern (50) eines Luftfahrzeugs (1), das mindestens einen motorisierten "Trimmzylinder" (2) mit aktiver Verankerung umfasst, wobei der Trimmzylinder (2) mindestens einen Elektromotor (3, 3'), mindestens eine elektronische Leistungsschaltung (4, 4') zum Versorgen des mindestens einen Elektromotors (3, 3') mit elektrischer Energie und eine Drehzahlreduziereinrichtung (5) zum Reduzieren der Drehzahl einer Drehachse (9, 9') des mindestens einen Elektromotors (3, 3') umfasst, wobei die Drehzahlreduziereinrichtung (5) es ermöglicht, eine Ausgangswelle (11) des Trimmzylinders (2) mit einer Ausgangsdrehzahl zu drehen, die niedriger ist als eine Eingangsdrehzahl der Drehachse (9, 9') des mindestens einen Elektromotors (3, 3'),
**dadurch gekennzeichnet, dass** das Steuerverfahren (50) drei verschiedene und ineinandergreifende Regelkreise aufweist, wobei die drei Regelkreise durch einen elektrischen Stromregelkreis (20), einen Drehzahlregelkreis (30) und einen Kraftregelkreis (40) gebildet sind, und dass:
in dem elektrischen Stromregelkreis (20):
• am Eingang des mindestens einen Elektromotors (3, 3') durch mindestens eine elektrische Stromsonde (21, 21', 21") ein Wert eines von der mindestens einen elektronischen Leistungsschaltung (4) bereitgestellten elektrischen Versorgungsstroms gemessen wird, und
• auf der Drehachse (9, 9') des mindestens einen Elektromotors (3, 3') durch mindestens einen ersten Positionssensor (22) eine Winkelposition der Drehachse (9, 9') in Bezug auf einen festen Rahmen (12) des Trimmzylinders (2) gemessen wird,
in dem Drehzahlregelkreis (30):
• auf der Ausgangswelle (11) durch mindestens einen zweiten Positionssensor (31) eine Winkelposition der Ausgangswelle (11) in Bezug auf den festen Rahmen (12) des Trimmzylinders (2) gemessen wird,
• ein Ausgangszweig (32) mit einem Eingang (23) des elektrischen Stromregelkreises (20) verbunden wird,
in dem Kraftregelkreis (40):
• an mindestens einem Flugsteuerelement (13) durch mindestens einen Kraftsensor (41) eine auf das mindestens eine Flugsteuerelement (13) ausgeübte äußere Kraft gemessen wird,
• eine Ausgangsleitung (42) mit einem Eingang (33) des Drehzahlregelkreises (30) verbunden wird.

11. Verfahren nach Anspruch 10,
**dadurch gekennzeichnet, dass** der mindestens eine Elektromotor (3, 3') vom Dreiphasentyp ist, wobei der elektrische Stromregelkreis (20) einen Schritt des Messens (51), mit Hilfe von drei elektrischen Stromsonden (21, 21', 21"), von drei Werten eines von der mindestens einen elektronischen Leistungsschaltung (4, 4') bereitgestellten elektrischen Versorgungsstroms umfasst.

12. Verfahren nach Anspruch 11,
**dadurch gekennzeichnet, dass** mit Hilfe mindestens eines Rechners (14) ein Vektorsteuerungsschritt (52) des mindestens einen dreiphasigen Elektromotors (3, 3') ausgeführt wird, wobei ein solcher Vektorsteuerungsschritt (52) es ermöglicht, zwei orthogonale Komponenten bereitzustellen:
eine für eine Regelung eines Magnetflusses des mindestens einen Elektromotors (3, 3') repräsentative erste Komponente und eine für eine Regelung eines Motordrehmoments des mindestens einen Elektromotors (3, 3') repräsentative zweite Komponente.

13. Verfahren nach einem der Ansprüche 10 bis 12,
**dadurch gekennzeichnet, dass** der Drehzahlregelkreis (30) einen Berechnungsschritt (53) beinhaltet, der es ermöglicht, mit Hilfe einer Berechnungsschaltung (34) unter Verwendung eines ersten Signals, das für die Winkellage der Ausgangswelle (11) des Trimmzylinders (2) repräsentativ ist, als Eingabe ein zweites Signal zu bestimmen, das für eine Drehzahl der Ausgangswelle (11) repräsentativ ist.

14. Verfahren nach einem der Ansprüche 10 bis 13,
**dadurch gekennzeichnet, dass** der elektrische Stromregelkreis (20) einen ersten Filterungsschritt (54) umfasst, der es ermöglicht, über mindestens einen ersten Filter (25, 25') Störfrequenzen aus einem für die Winkelposition der Drehachse (9, 9') des mindestens einen Elektromotors (3, 3') repräsentativen Signal zu eliminieren.

15. Verfahren nach einem der Ansprüche 10 bis 14,
**dadurch gekennzeichnet, dass** der Drehzahlregelkreis (30) einen zweiten Filterungsschritt (55) umfasst, der es ermöglicht, über mindestens einen zweiten Filter (35, 35') Störfrequenzen aus einem für die Winkelposition der Abtriebswelle (11) des Trimmzylinders (2) repräsentativen Signal zu eliminieren.

16. Verfahren nach einem der Ansprüche 10 bis 15,
**dadurch gekennzeichnet, dass** der Kraftregelkreis (40) einen Speicherschritt (56) des Speicherns mindestens einer vorgegebenen Tabelle von Kraftwerten umfasst, die auf das mindestens eine Flugsteuerelement (13) in Abhängigkeit von von dem mindestens einen zweiten Positionssensor (31) des Drehzahlregelkreises (30) übertragenen Positionsdaten angewendet werden.

## Claims

1. Control device (10) of an aircraft (1), said control device (10) comprising at least one motorised "trim actuator" (2) having movable anchorage, said trim actuator (2) comprising at least one electric motor (3, 3'), at least one electronic power circuit (4, 4') for supplying electrical energy to said at least one electric motor (3, 3'), and speed reduction means (5) for reducing the speed of rotation of a rotary shaft (9, 9') of said at least one electric motor (3, 3'), said speed reduction means (5) making it possible to rotate an output shaft (11) of said trim actuator (2) at an output speed of rotation that is less than an input speed of rotation of said rotary shaft (9, 9') of said at least one electric motor (3, 3'),
**characterised in that** said control device (10) implements three separate servo loops that are nested in one another, said three servo loops being formed by an electric current servo loop (20), a speed servo loop (30) and a force servo loop (40), and **in that**:
said electric current servo loop (20) comprises:
- at least one electric current probe (21, 21', 21") that is arranged at the input of said at least one electric motor (3, 3') and is intended for measuring a value of an electrical energy electrical supply current provided by said at least one electronic power circuit (4), and
- at least one first position sensor (22) that is arranged on said rotary shaft (9, 9') of said at least one electric motor (3, 3') and is intended for measuring an angular position of said rotary shaft (9, 9') relative to a fixed frame (12) of said trim actuator (2),
said speed servo loop (30) comprises:
- at least one second position sensor (31) that is arranged on said output shaft (11) of said trim actuator (2) and is intended for measuring an angular position of said output shaft (11) relative to said fixed frame (12) of said trim actuator (2),
- an output branch (32) that is connected to an input (23) of said electric current servo loop (20),
said force servo loop (40) comprising:
- at least one force sensor (41) that is arranged in the region of at least one flight control member (13) and is intended for measuring an external force exerted on said at least one flight control member (13),
- an output line (42) that is connected to an input (33) of said speed servo loop (30).

2. Device according to claim 1,
**characterised in that** said at least one electric motor (3, 3') is of the triphase type and said electric current servo loop (20) comprises three electric current probes (21, 21', 21") that each measure a value of an electrical energy electrical supply current provided by said at least one electronic power circuit (4, 4').

3. Device according to claim 2,
**characterised in that** said control device (10) comprises at least one computer (14) that makes it possible to implement a vector control method of said at least one triphase electric motor (3, 3'), a vector control method of this kind making it possible to provide two orthogonal components: a first component that is representative of control of a magnetic flux of said at least one electric motor (3, 3'), and a second component that is representative of control of a motor torque of said at least one electric motor (3, 3').

4. Device according to any of claims 1 to 3,
**characterised in that** said speed servo loop (30) comprises a calculation circuit (34) that makes it possible to determine, from a first signal that is representative of said angular position of said output shaft (11) of said trim actuator (2), a second signal that is representative of a speed of rotation of said output shaft (11).

5. Device according to any of claims 1 to 4,
**characterised in that** said electric current servo loop (20) comprises at least one first filter (25, 25') that makes it possible to eliminate spurious frequencies of a signal that is representative of said angular position of said rotary shaft (9, 9') of said at least one electric motor (3, 3').

6. Device according to any of claims 1 to 5,
**characterised in that** said speed servo loop (30) comprises at least one second filter (35, 35') that makes it possible to eliminate spurious frequencies of a signal that is representative of said angular position of said output shaft (11) of said trim actuator (2).

7. Device according to any of claims 1 to 6,
**characterised in that** said at least one force sensor (41) is arranged so as to be mechanically in series with respect to said at least one flight control member (13).

8. Device according to any of claims 1 to 7,
**characterised in that** said force servo loop (40) comprises a memory (43) that makes it possible to store at least one table of predetermined force values to be applied to said at least one flight control member (13) as a function of an item of position data transmitted by said at least one second position sensor (31) of said speed servo loop (30).

9. Aircraft (1), **characterised in that** said aircraft (1) comprises a control device (10) according to any of claims 1 to 8.

10. Method (50) for controlling an aircraft (1) comprising at least one motorised "trim actuator" (2) having movable anchorage, said trim actuator (2) comprising at least one electric motor (3, 3'), at least one electronic power circuit (4, 4') for supplying electrical energy to said at least one electric motor (3, 3'), and speed reduction means (5) for reducing the speed of rotation of a rotary shaft (9, 9') of said at least one electric motor (3, 3'), said speed reduction means (5) making it possible to rotate an output shaft (11) of said trim actuator (2) at an output speed of rotation that is less than an input speed of rotation of said rotary shaft (9, 9') of said at least one electric motor (3, 3'),
**characterised in that** said control method (50) involves three separate servo loops that are nested in one another, said three servo loops being formed by an electric current servo loop (20), a speed servo loop (30) and a force servo loop (40), and **in that**:
in said electric current servo loop (20):
- a value of an electrical energy electrical supply current provided by said at least one electronic power circuit (4, 4') is measured at the input of said at least one electric motor (3, 3') by means of at least one electric current probe (21, 21', 21"), and
- an angular position of said rotary shaft (9, 9') relative to a fixed frame (12) of said trim actuator (2) is measured on said rotary shaft (9, 9') of said at least one electric motor (3, 3') by means of at least one first position sensor (22),
in said speed servo loop (30):
- an angular position of said output shaft (11) relative to said fixed frame (12) of said trim actuator (2) is measured on said output shaft (11) by means of at least one second position sensor (31), and
- an output branch (32) is connected to an input (23) of said electric current servo loop (20),
in said force servo loop (40):
- an external force exerted on at least one flight control member (13) is measured in the region of said at least one flight control member (13) by means of at least one force sensor (41),
and
- an output line (42) is connected to an input (33) of said speed servo loop (30).

11. Method according to claim 10,
**characterised in that**, said at least one electric motor (3, 3') being of the triphase type, said electric current servo loop (20) comprises a step of measuring (51), by means of three electric current probes (21, 21', 21"), three values of an electrical energy electrical supply current provided by said at least one electronic power circuit (4, 4').

12. Method according to claim 11,
**characterised in that** said method implements, by means of at least one computer (14), a step of vector control (52) of said at least one triphase electric motor (3, 3'), a vector control step (52) of this kind making it possible to provide two orthogonal components: a first component that is representative of control of a magnetic flux of said at least one electric motor (3, 3'), and a second component that is representative of control of a motor torque of said at least one electric motor (3, 3').

13. Method according to any of claims 10 to 12,
**characterised in that** said speed servo loop (30) comprises a calculation step (53) that makes it possible to determine, by means of a calculation circuit (34) and using, at the input, a first signal that is representative of said angular position of said output shaft (11) of said trim actuator (2), a second signal that is representative of a speed of rotation of said output shaft (11).

14. Method according to any of claims 10 to 13,
**characterised in that** said electric current servo loop (20) comprises a first filtering step (54) that makes it possible, by means of at least one first filter (25, 25'), to eliminate spurious frequencies of a signal that is representative of said angular position of said rotary shaft (9, 9') of said at least one electric motor (3, 3').

15. Method according to any of claims 10 to 14,
**characterised in that** said speed servo loop (30) comprises a second filtering step (55) that makes it possible, by means of at least one second filter (35, 35'), to eliminate spurious frequencies of a signal that is representative of said angular position of said output shaft (11) of said trim actuator (2).

16. Method according to any of claims 10 to 15,
**characterised in that** said force servo loop (40) comprises a storage step (56) that makes it possible to store at least one table of predetermined force values to be applied to said at least one flight control member (13) as a function of an item of position data transmitted by said at least one second position sensor (31) of said speed servo loop (30).
